# EUROPEAN PATENT APPLICATION

(11) **EP 2 400 380 A2**
(43) Date of publication of application: **28.12.2011**
(21) Application number: 11151067.3
(22) Date of filing: 17.01.2011
(51) Int. Cl.: G06F 3/048

(54) **Display apparatus and control method thereof**

(30) Priority: 22.06.2010 KR 20100059104
(71) Applicant: Samsung Electronics Co., Ltd., Gyeonggi-do 442-742 (KR)
(72) Inventor: Yoo, Ho-june, Seoul (KR); Soh, Byung-seok, Gyeonggi-do (KR); Choi, Eun-seok, Gyeonggi-do (KR); Choi, Sang-on, Gyeonggi-do (KR); Moon, Jong-bo, Gyeonggi-do (KR)
(74) Representative: Robinson, Ian Michael

(57) **Abstract**

A display apparatus includes: a display unit (10); a user interface (UI) generator (20) which generates UI information to be displayed on the display unit (10); a user input (30) unit which includes a touch pad (31); and a controller (50) which controls the UI generator (20) to display a plurality of selective items per item page on the display unit, to move a focus in accordance with a touch motion of the user, and to stop moving the focus if the focus is located at an outermost selective item positioned at an edge of the item page.

## Description

### BACKGROUND

### Field

Apparatuses and methods consistent with the exemplary embodiments relate to a display apparatus and a control method of the same, and more particularly, to a display apparatus capable of displaying a user interface (UI) with a plurality of icons, and a control method of the same.

### Description of the Related Art

Direction buttons, a joystick, a keyboard, etc. are generally used as a user interface (UI) tool for controlling a display apparatus or various audio/video (AV) devices, so that a user can use them to move a focus or select a desired item.

With this arrangement, it is possible to control the focus to be moved by one step once a user clicks the button, or be moved by many steps if a user keeps pushing the button or the joystick.

Recently, a device based on a touch sensor such as a touch pad, a touch screen, etc. has been used, so that a user can more conveniently and quickly move the focus or control a graphic user interface (GUI) through a finger or a pointing device.

### SUMMARY

Exemplary embodiments provide a display apparatus and a control method thereof, in which an item page can be properly moved.

Exemplary embodiments also provide a display apparatus and a control method thereof, in which a selected item can be easily browsed.

Exemplary embodiment also provide a display apparatus and a control method thereof, in which a user's intention can be ascertained through control of stopping at each item page in accordance with touch motion.

An aspect of an exemplary embodiment provides a display apparatus including: a display unit; UI generator which generates UI information to be displayed on the display unit; a user input unit which includes a touch pad and inputs a touch motion; and a controller which controls the UI generator to display a plurality of item pages, at least one item page among the plurality of the item pages comprising a plurality of selective items displayed on the display unit, to move a focus among the plurality of the selective items in accordance with the touch motion from the user input unit, and to stop moving the focus if the focus is located at an outermost selective item among the plurality of the selective items, the outermost selective item being positioned at an edge of one of the item pages.

The controller may control the focus to be movable if the touch motion is generated after the user stops contacting the touch pad while the focus is located at the outermost selective item.

The controller may determine whether a direction of the touch motion generated before the user stops contacting the touch pad is the same as a direction of the touch motion generated after the user stops contacting the touch pad and reestablishes contact with the touch pad, and control the UI generator to move the item page in the direction of the touch motion if it is determined that the directions are the same as each other.

The plurality of selective items may be arranged in a latticed pattern.

The controller may control the UI generator to move the focus among the selective items in accordance with a moving distance and a moving speed based on the touch motion of the user.

The user input unit may remotely communicate with the controller.

An aspect of another exemplary embodiment provides a display apparatus including a display unit; a user interface (UI) generator which generates UI information to be displayed on the display unit; a signal receiver which receives a touch motion signal as a user operates a touch pad; and a controller which controls the UI generator to display a plurality of item pages, at least one of the plurality of item pages comprising a plurality of selective items displayed on the display unit, to move a focus in accordance with the touch motion signal, and to stop moving the focus if the focus is located at an outermost selective item among the plurality of selective items, the outermost selective item being positioned at an edge of the item page.

The user touch motion signal may include a signal indicating whether the user is contacting the touch pad, and the controller may control the focus to be movable if, while the focus is located at the outermost selective item, the signal receiver receives a signal indicating that the user is contacting the touch pad after receiving a signal indicating that the user is not contacting the touch panel.

The touch motion signal may be based on a direction of touch motion of the user, and the controller may determine whether a direction of the touch motion generated before the user stops contacting the touch pad is to the same as a direction of the touch motion generated after the user stops contacting the touch pad and reestablishes contact with the touch pad, and control the UI generator to move the item page displayed on the display unit in the direction of the touch motion if it is determined that the directions of the touch motions are the same as each other.

The controller may control the UI generator to move the focus in accordance with a moving distance and a moving speed based on the touch motion of a user.

The plurality of selective items may be arranged in a latticed pattern.

An aspect of another exemplary embodiment provides a method of controlling a display apparatus that displays a plurality of item pages, at least one item page among the plurality of item page comprising a plurality of selective items, the method including: determining whether a focus moving among the plurality of the selective items in accordance with a touch motion of a user is located at an outermost selective item among the plurality of the selective items, the outermost selective item being positioned at an edge of the item page; and stopping moving the focus if it is determined that the focus is located at the outermost selective item.

The method may further include moving the focus if the user inputs a touch motion on a touch panel after the user stops contacting the touch panel.

The method may further include determining whether a direction of a touch motion generated before the user stops contacting the touch panel is the same as a direction of a touch motion generated after the user stops contacting the touch panel and reestablishes contact with the touch panel; and moving the plurality of the item pages in the direction of the touch motion if it is determined that the directions of the touch motion are to the same as each other.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of a display apparatus according to an exemplary embodiment;

FIG. 2 is a view showing UI information displayed in the display apparatus and a touch pad according to an exemplary embodiment;

FIG. 3 is a view showing the display apparatus and the touch pad of FIG. 2 illustrating a method of moving a focus on the UI information of FIG. 2;

FIG. 4 is a view which illustrates a method wherein the focus is stopped at the outermost selective item in FIG. 3;

FIG. 5 is a view which illustrates a method wherein the focus moves between item pages in FIG. 2;

FIG. 6 is a control flowchart for explaining a control method of a display apparatus according to an exemplary embodiment; and

FIG. 7 is a control block diagram of a display apparatus according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

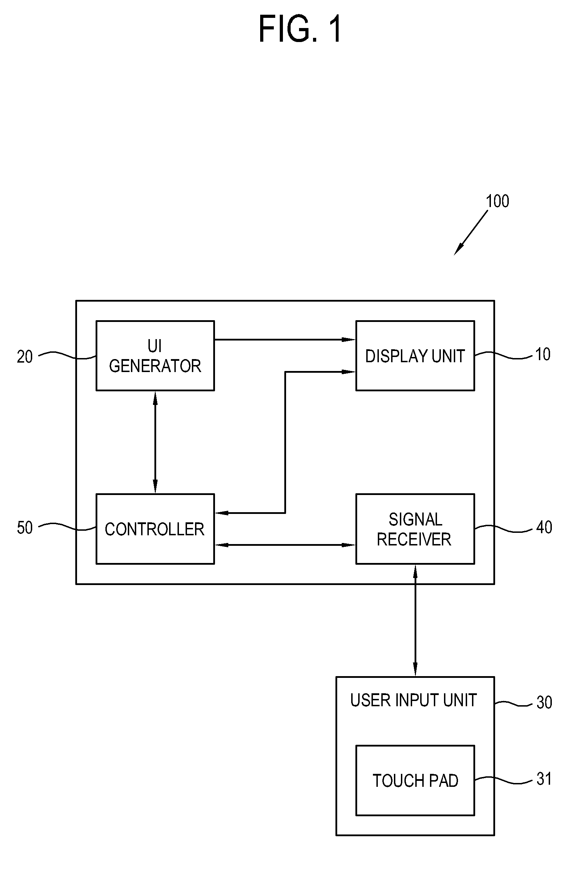

FIG. 1 is a control block diagram of a display apparatus according to an exemplary embodiment.

A display apparatus 100 includes a display unit 10, a UI generator 20, a user input unit 30, a signal receiver 40 to receive a signal from the user input unit 30, and a controller 50 controlling the display unit 10, the generator 20, the user input unit 30, and the signal receiver 40. The display apparatus 100 may be achieved by an Internet protocol television (IP TV) that can receive service through the Internet, and may include various AV devices such as a computer system, a notebook computer, etc., having a display unit, such as a monitor, a screen, etc. Also, the display apparatus 100 may include a netbook, various mobile terminals, an electronic book (E-book), etc. The display apparatus 100 may further include a communication unit (not shown) to receive contents from an external contents provider.

The display unit 10 may include a liquid crystal display (LCD) panel having a liquid crystal layer, an organic light emitting display (OLED) panel having an organic light emitting layer, a plasma display panel (PDP), etc., and a panel driver (not shown) to drive the panel. The display unit 10 may display a broadcasting signal, a still image such as a photograph, and various moving pictures, and display UI information provided by the UI generator 20. Also, the display unit 10 may display an electronic program guide (EPG) corresponding to broadcasting program information and contents and applications provided from the contents provider in the form of an icon.

The display apparatus 100 may further include a video processor (not shown) to process an input image and output the image to the display unit 10.

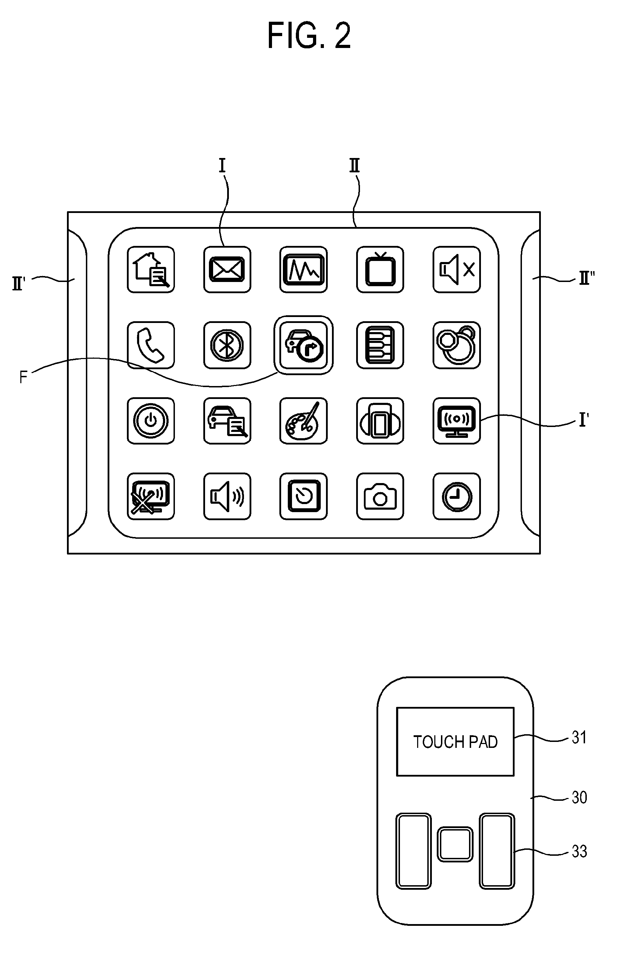

The UI generator 20 generates various UI information to be given to a user and displays it on the display unit 10. FIG. 2 is a view showing the UI information generated by the UI generator 20. In the exemplary embodiment, various items which are selectable by a user are selective items I, I', I", and the UI generator 20 displays a preset number of the selective items I on the display unit 10. The preset number of selective items I are displayed per item page II on the display unit 10, and the item page II may be continuously browsed, i.e., a plurality of item pages may be scrolled through such that substantially only a single item page is displayed on the display unit at any given time. As shown therein, a previous item page II' and a next item page II" continue at a left side and a right side of a current item page II, respectively. The selective items I in this exemplary embodiment are arranged in a latticed pattern. For example, the selective items I are displayed in the form of a matrix of 5x4 within one item page II. The selective item I positioned at the edge of the current item page II will be called an outermost selective item I'. As described above, a widget or the like application may be displayed as one of the selective items I. A user may select the item page II through the user input unit 30 (to be described later), and select one of the selective items I provided on the currently displayed item page II. On the selected one of the selective items I, a focus F for a user's instruction and selection is displayed. The focus F is for distinguishing the selective item I selected by a user from other selective items I not selected by the user. The focus F may be, for example, displayed as a frame having a certain color or may highlight the selective item I.

The UI generator 20 may be merged into the controller 50 (to be described later) and provided as a single configuration. For convenience of description, the UI generator 20 is described as a separate configuration, but not physically separated from other elements.

The user input unit 30 corresponds to a user interface for a user's input. In this exemplary embodiment, the user input unit 30 may be achieved by a remote controller that can remotely communicate with the controller 50. The user input unit 30 includes a touch pad 31 to sense a user's touch, and additionally includes a plurality of buttons 33. The touch pad 31 is provided in a place where a user can easily touch it while holding the user input unit 30 in one hand, and there may be at least one touch pad. Under the touch pad 31, one tact switch may be installed. A user moves among the plurality of selective items I in accordance with touch motion, and pushes the tact switch to select the selective item I where the focus F is located. A user may perform various operations on the touch pad 31. For example, a user may perform a touch move, a tap operation of slightly touching the touch pad, a click, a double-click, a drag-and-drop, etc. The user input unit 30 may be achieved by a remote controller for controlling a television at home, or a dual television that has recently developed actively. That is, the user input unit 30 may be achieved by an auxiliary television having a display unit and a touch pad for controlling a main television, or may be achieved by a mobile phone having a remote control function.

The signal receiver 40 remotely receives a signal from the user input unit 30, and outputs it to the controller 50. The signal receiver 40 may be realized by a communication module that can receive an infrared (IR) signal.

The controller 50 controls the UI generator 20 to display the preset number of the selective items I per item page II on the display unit 10 as shown in FIG. 2, and moves the focus F in accordance with a user's operation, thereby displaying the item page II.

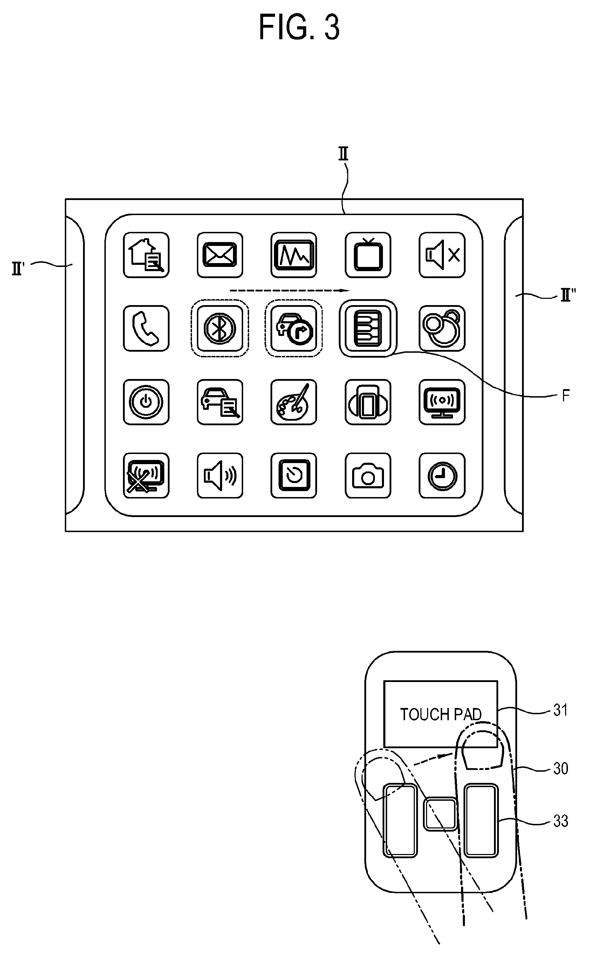

FIG. 3 is a view showing a method of moving a focus on the UI information of FIG. 2. The controller 50 controls the focus F to move among the selective items I in accordance with a moving distance and a moving speed based on a user's touch motion. For example, if the moving speed based on a user's touch motion is slow, the focus F moves slowly between the selective items I in accordance with a direction of the touch motion. On the other hand, if the moving speed based on a user's touch motion is fast, the focus F moves by a long distance in proportion to the fast moving speed, i.e., the focus F moves quickly between the selective items I.

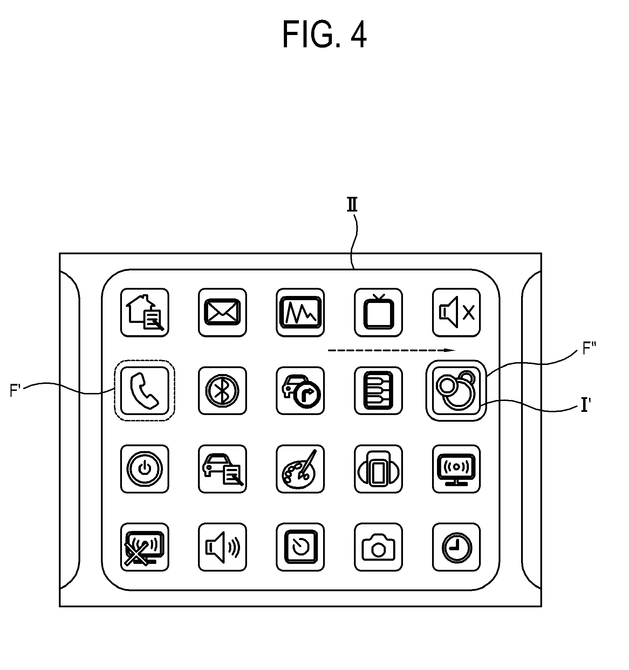

Further, the controller 50 controls the UI generator 20 to stop moving the focus F if the focus F moving among the selective items I in accordance with a user's touch motion is located at the outermost selective item I' of the item page II. FIG. 4 is a view for explaining that the focus is stopped at the outermost selective item in FIG. 3. As shown therein, if the user chooses to move the leftmost focus F' on the item page II to the outermost selective item I' on the opposite side, a user will increase the moving speed based on the touch motion to quickly move the focus F'. When quickly moving, the focus F is likely to go beyond a user's desired page and move to the next item page II". That is, the focus F may move from the current item page II to the next item page II" due to an operation characteristic of the touch pad 31 even though a user wants to quickly move between the selective items I distant from each other to some extent.

To solve this problem, the controller 50 controls the focus F to stop at the outermost selective item I' when the focus F moving among the selective items I is located at the outermost selective item I' on the item page II, i.e., when the focus is located at focus F" in FIG. 4. However, the focus F does not unconditionally stop at the outermost selective item I' but stops in accordance with the moving direction. For example, if the touch motion is performed from left to right, the focus F is stopped at the rightmost selective item I', i.e., at the focus F", as shown in FIG. 4. If the touch motion is performed from up to down, the focus F is moved downwardly along the rightmost selective items and is stopped at the downmost selective item, i.e., is stopped at the selective item positioned in the lower right corner in FIG. 4. Although the focus F is located on the selective item that belongs to the downmost line, if the touch motion is performed in a direction from right to left, the focus F is not stopped and continues to move to the left among the downmost selective items. Through this control, a user can freely move the focus F within the currently displayed item page II. Also, it is possible to prevent unintended moving between the item pages II.

After the focus F is stopped, the controller 50 controls the focus F to be movable when receiving a touch signal again as a user stops contacting the touch pad 31 and reestablishes contact with the touch pad 31, i.e., when the user takes his/her hand off the touch pad 31 and then touches it again. The stopped focus F moves corresponding to the touch motion following after a user takes his/her hand off the touch pad 31 and touches it again.

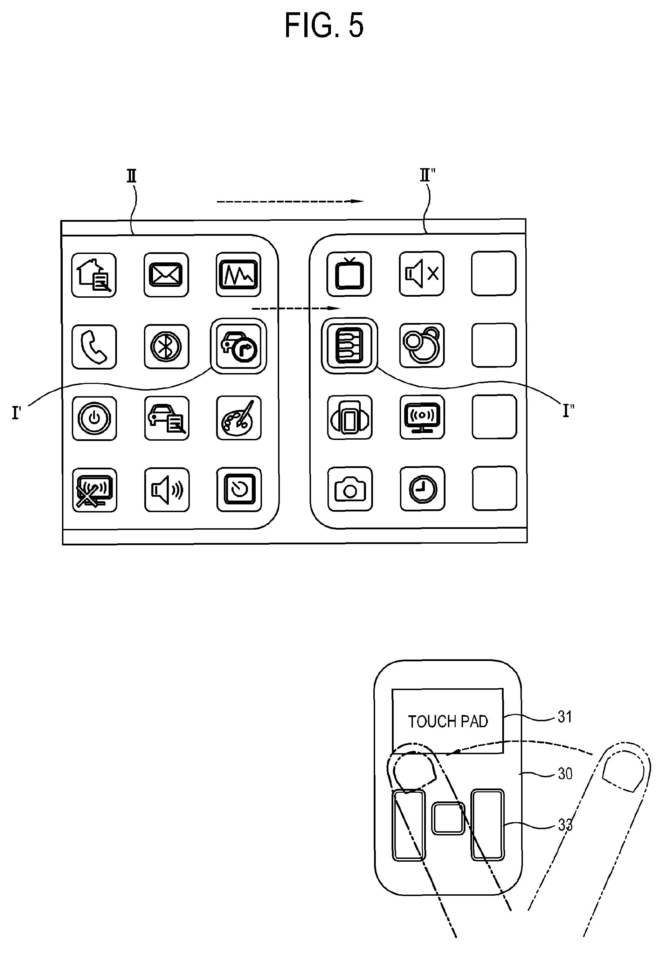

FIG. 5 is a view for explaining that the focus moves between item pages in FIG. 2, i.e., for explaining the moving between the item pages. The controller determines whether a direction of the touch motion before a user takes his/her hand off the touch pad 31 is the same as that of the touch motion after a touch is generated again, i.e., after the user stops contacting the touch pad 31 and reestablishes contact with the touch pad 31. As a result of the determination, if the two directions of the touch motions are the same as each other, the controller 50 controls the UI generator 20 to move the item page II displayed on the display unit 10 in the direction of the touch motion. As shown in FIG. 5, if the current item page II is moved into the next item page II", the focus F is also moved from the outermost selective item I' of the current item page II to the outmost selective item I" of the next item page II".

On the other hand, if the touch motion after a user takes his/her hands off the touch pad 31 is performed in a direction opposite to or different from that of the touch motion before s/he takes her/his hands off the touch pad 31, the controller 50 controls the focus F to move in accordance with the moving distance and the moving speed of common movement of the focus F within the item page II, i.e., the focus F is moved based on the moving distance and moving speed without moving to a different item page.

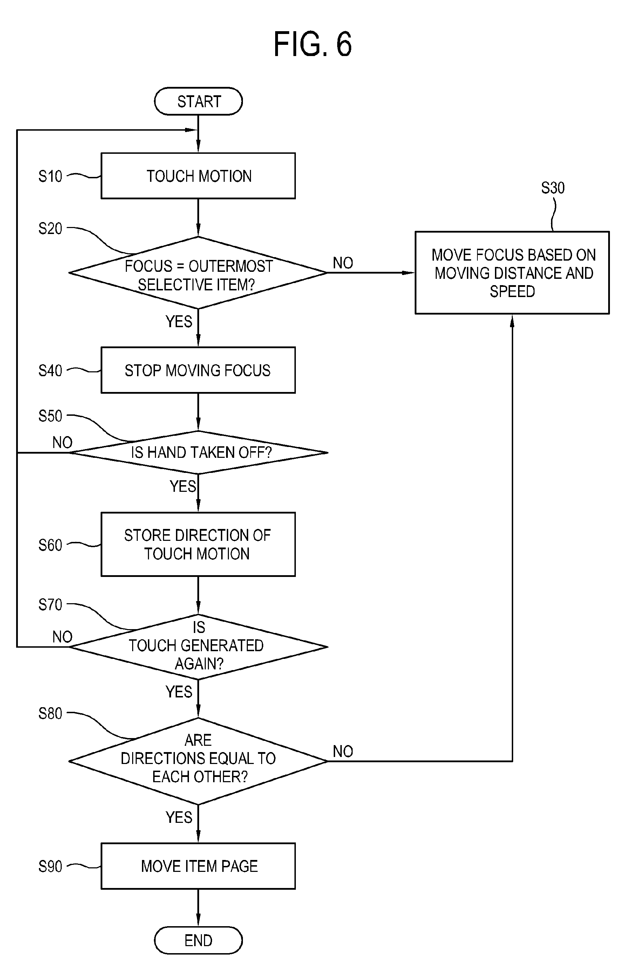

FIG. 6 is a control flowchart for explaining a control method of a display apparatus according to an exemplary embodiment. Referring to FIG. 6, the movement of the focus is controlled by the controller 50 as follows.

First, when sensing touch motion or touch (S10), the controller 50 determines whether the focus F is located in the outermost selective item I' of the item page II (S20).

If the focus F is not located in the outermost selective item I' of the item page II, the focus F is moved corresponding to the moving distance and the moving speed based on the touch motion (S30).

If the focus F is located in the outermost selective item I' of the item page II, the controller 50 controls the focus F not to move in the outermost selective item I' anymore but to stop (S40).

Then, it is determined whether a user takes his/her hand off the touch pad 31 (S50), i.e., whether the user is contacting the touch pad 31. If a user does not takes his/her hand off the touch pad 31, it is sensed whether a touch is generated again (S10), i.e., whether a user reestablishes contact with the touch pad 31.

On the other hand, if a user takes his/her hand off the touch pad 31, the controller 50 stores the direction of the touch motion before s/he takes her/his hand off the touch pad 31 (S60). Here, the direction of the touch motion may be stored by determining coordinates on the touch pad 31 where the touch is sensed.

After a user takes his/her hand off the touch pad 31, if a user's touch motion is sensed (S70), the controller 50 determines the direction of the touch motion, stores it, and determines whether the stored direction of the touch motion is the same as that of the touch motion before s/he took her/his hand off the touch pad 31 (S80). Whether the directions of the touch motion are the same as each other may be determined by determining whether up, down, left and right directions such as directions from left to right, from right to left, from up to down, and from down to up are the same as each other, but not limited thereto. Alternatively, whether the directions of the touch motion are the same as each other may be determined by more precise standards. The standards for determining whether the directions of the touch motion are the same as each other may be varied depending on the size and sensitivity of the touch pad 31, or may be set by a user.

If the stored directions of the touch motion are the same as each other, the controller 50 moves the item page II in accordance with the direction of the touch motion (S90).

If the direction of the touch motion is different between before and after a user takes his/her hand off the touch pad 31, the focus is moved in the direction of the touch motion generated after s/he takes her/his hand off the touch pad 31 (S30).

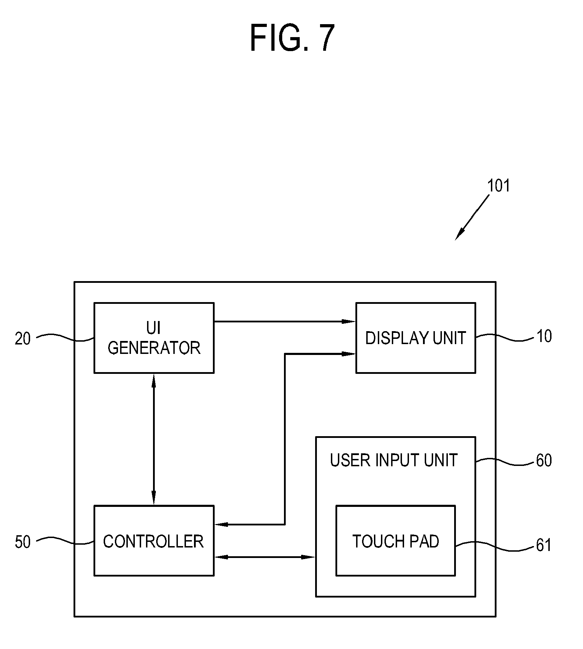

FIG. 7 is a control block diagram of a display apparatus according to another exemplary embodiment. As shown therein, the user input unit 60 in this exemplary embodiment performs wired communication with the controller 50, and is not provided as an independent device but provided in a single apparatus including the display unit 10. That is, the display apparatus 101 is configured to include the user input unit 60 in a physically single housing. For example, the display apparatus 101 may include a mobile terminal such as a notebook computer, an E-book, a netbook, etc. According to alternative exemplary embodiment, the display apparatus may be achieved by a digital camera, a MP3 player, a tablet personal computer (PC), a hand held products (HHP), etc. According to an exemplary embodiment, the user input unit 60 is not limited to the remote controller as shown in FIG. 1, and may include any user input device including a touch pad. In these exemplary embodiments, the UI control method based on communication between the user input unit 60 and the controller 50 is substantially equal to that of the foregoing exemplary embodiment.

Thus, the display apparatus is capable of displaying the selective item per page in order to allow a user to easily browse the selective items. To this end, the display apparatus provides a UI in which a user's intention can be ascertained through the control of stopping per page in accordance with the touch motion.

As described above, there are provided a display apparatus and a control method thereof, in which an item page can be properly moved.

Also, there are provided a display apparatus and a control method thereof, in which a selected item can be easily browsed.

Further, there are provided a display apparatus and a control method thereof, in which a user's intention can be ascertained through control of stopping at each item page in accordance with touch motion

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A display apparatus comprising:
a display unit;
a user interface (UI) generator which generates UI information to be displayed on the display unit;
a user input unit which comprises a touch pad and receives a touch motion; and
a controller which controls the UI generator to display a plurality of item pages, at least one item page of the plurality of item pages comprising a plurality of selective items displayed on the display unit, to move a focus among the plurality of the selective items in accordance with the touch motion from the user input unit, and to stop moving the focus if the focus is located at an outermost selective item among the plurality of the selective items, the outermost selective item being positioned at an edge of the one item page of the plurality of item pages.

2. The display apparatus according to claim 1, wherein the controller controls the focus to be movable if the touch motion is generated after the user stops contacting the touch pad while the focus is located at the outermost selective item.

3. The display apparatus according to claim 2, wherein the controller determines whether a first direction of the touch motion generated before the user stops contacting the touch pad is same as a second direction of the touch motion generated after the user stops contacting the touch pad and reestablishes contact with the touch pad, and controls the UI generator to move the plurality of item pages in the first or the second direction of the touch motion if it is determined that the first and the second directions are same.

4. The display apparatus according to claim 1, wherein the plurality of selective items are arranged in a latticed pattern.

5. The display apparatus according to claim 1, wherein the controller controls the UI generator to move the focus among the plurality of the selective items in accordance with a moving distance and a moving speed based on the touch motion of the user.

6. The display apparatus according to claim 1, wherein the user input unit remotely communicates with the controller.

7. A method of controlling a display apparatus that displays a plurality of item pages, at least one item page of the plurality of item pages comprising a plurality of selective items, the method comprising:
determining whether a focus moving among the plurality of the selective items in accordance with a touch motion of a user is located at an outermost selective item among the plurality of the selective items, the outermost selective item being positioned at an edge of the one item page of the plurality of item pages; and
stopping moving the focus if it is determined that the focus is located at the outermost selective item.

8. The method according to claim 7, further comprising moving the focus if the user inputs a touch motion on a touch panel after the user stops contacting the touch panel.

9. The method according to claim 8, further comprising
determining whether a first direction of the touch motion generated before the user stops contacting the touch panel is same as a second direction of the touch motion generated after the user stops contacting the touch panel and reestablishes contact with the touch panel; and
moving the plurality of the item pages in the first or the second direction of the touch motion if it is determined that the first and the second directions of the touch motion are same.
